# EUROPEAN PATENT APPLICATION

(11) **EP 2 260 720 A1**
(43) Date of publication of application: **15.12.2010**
(21) Application number: 10251026.0
(22) Date of filing: 02.06.2010
(51) Int. Cl.: A23L 1/00, A23L 1/015, A61K 9/48

(54) **Method for reducing surface oil, on encapsulated material**

(30) Priority: 05.06.2009 US 479433
(71) Applicant: Kraft Foods Global Brands LLC, Northfield, IL 60093 (US)
(72) Inventor: Akashe, Ahmad, Mundelein, IL 60060 (US); Gaonkar, Anikumar Ganapati, Buffalo Grove, IL 60089 (US); Lawrence, Les, Rolling Meadows, IL 60008 (US); Lopez, Amado R., Chicago, IL 60634 (US); Meibach, Ronald L., Deerfiled, IL 60015 (US)
(74) Representative: Setna, Rohan P.

(57) **Abstract**

A method is provided for removing surface oil from a surface of an encapsulated material without using any type of solvent. The method includes contacting an encapsulated material having a moisture content of about 1 to about 60 weight percent with at least about 5 weight percent of an oil removing material for an amount of time effective for reducing surface oil on the encapsulated material by at least about 80%. In an important aspect of the application, the oil removing material is SiO₂.

## Description

The present invention relates to methods for removing and reducing oil on a surface of encapsulated material without use of organic solvents. More specifically, encapsulated materials are contacted with oil removing materials which are effective for reducing oil on the surface of the encapsulated material.

### BACKGROUND

There has been a considerable amount of work in the field of flavorant material for use in orally utilized compositions. It is often desirable to provide these flavorant materials or other active ingredients in a form that is less volatile and more stable, thus avoiding loss or degradation. A technique commonly employed in this regard, is the encapsulation of the active ingredient within a shell or matrix of a material designed to provide a complete coating around particles of the active ingredient.

In processes where oils are the active ingredient that is being encapsulated or in processes that include oils, some amount of oil may remain on a surface of the encapsulated material. Oils on the surface of the microcapsules tend to oxidize, which results in off-flavors. A common practice for removing surface oils relies on using solvents such as alcohol, hexane or other organic solvents. It is highly undesirable to use solvents in compositions intended for food use because of the difficulty in removing those solvents completely. Further, solvents may adversely affect encapsulated materials as common components used as coatings in making the encapsulated material may be soluble in solvents such as acetone and alcohol. Water alone or in combination with surfactants may have some degree of success, however, the use of water requires another drying step which increases processing costs. Further, there is a possibility of loss of active components upon additional drying steps.

### SUMMARY

A method is provided for removing surface oil form a surface of an encapsulated material without using any type of solvent. Removal of surface oil is effective for providing encapsulated materials having reduced off-flavors and/or off-taste. Encapsulated materials having reduced off-flavors and/or off-taste provide better tasting products, especially for example in beverages.

A method is provided for removing surface oil from an encapsulated material. The method includes contacting an encapsulated material having a moisture content of about 1 to about 60 weight percent, preferably about 1 to about 40 weight percent, with at least about 5 weight percent of an oil removing material. The encapsulated material is contacted with the oil removing material for an amount of time effective for reducing surface oil on the encapsulated material by at least about 80%, as compared to encapsulated material which has not been contacted with an oil removing material. The oil removing material has a particle size larger or smaller than a particle size of the encapsulated material which is effective for facilitating separation of the oil removing material from the encapsulated material. In an important aspect, the oil removing material is SiO₂.

In another aspect, a method is provided for removing surface oil from an encapsulated material where an oil removing material can be recycled and reused. In this aspect, encapsulated material is contacted with an oil removing material having a particle size larger or smaller than a particle size of the encapsulated material. The encapsulated material is contacted with the oil removing material for an amount of time effective for reducing surface oil on the encapsulated material by at least about 80%, as compared to encapsulated material which has not been contacted with an oil removing material. The oil removing material is separated from the encapsulated material and then treated to remove absorbed oil.

In another aspect, a method for forming an encapsulated material having reduced surface oil. The method includes forming an encapsulated material, screening the encapsulated material to remove excess water and form a wet filter cake, pressing the wet filter cake to remove more of the excess water and form a pressed wet filter cake, coarse milling the pressed wet filter cake, grinding and drying. In this method, SiO₂ may be added after forming an encapsulated material, after screening, after pressing, after coarse milling, after grinding, and/or during drying.

### BRIEF DESCRIPTION OF THE FIGURE

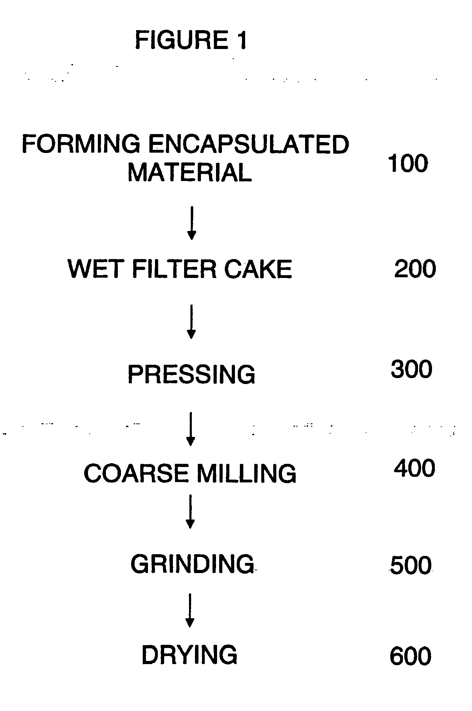

Figure 1 illustrates a method for forming encapsulated material.

### DETAILED DESCRIPTION

Encapsulated materials are formed and processed that oil remaining on the surface of the microcapsules is reduced without the use of organic solvents. As used herein "solvent free" refers to encapsulated materials which include less than a detectable level of organic solvent.

### Encapsulated Material

As used herein, "encapsulated material" or "microcapsules" generally describes spherical or irregular shaped particles which contain at least one solid or liquid core surrounded by at least one substantially continuous membrane/matrix. Examples of known microcapsules are the following commercial products (the membrane material is shown in brackets) Hallcrest Microcapsules (gelatin, gum arabic), Coletica Thalaspheres (maritime collagen), Lipotec Millicapseln (alginic acid, agar agar), Induchem Unispheres (lactose, microcrystalline cellulose, hydroxypropylmethyl cellulose), Unicerin C30 (lactose, microcrystalline cellulose, hydroxypropylmethyl cellulose), Kobo Glycospheres (modified starch, fatty acid esters, phospholipids), Softspheres (modified agar agar) and Kuhs Probiol Nanospheres (phospholipids).

Encapsulated materials which may be utilized includes encapsulated materials having a moisture contents of about 1 to about 60 weight percent, and in an important aspect, about 1 to about 40 weight percent, and in a very important aspect, about 10 to about 25 weight percent. While not intending to be bound by any theory, a moisture level in the indicated ranges is needed to sufficiently hydrate the oil removing material and thus increase the oil removing efficiency of the material.

Encapsulated material is contacted with at least about 5 weight percent of oil removing material, based on a total weight of the encapsulated material. In an important aspect, the encapsulated material is contacted with about 5 to about 50 weight percent of oil removing material, and in another aspect, about 15 to about 25 weight percent of oil removing material. In an important aspect, the oil removing material is SiO₂.

The oil removing material is contacted with the encapsulated material for any amount of time effective for reducing surface oil on the encapsulated materials by at least about 80%, in another aspect at least about 90%, and in another aspect at least about 98%. The encapsulated material is contacted with the oil removing material for at least about 5 minutes, in another aspect about 15 minutes, and in another aspect, about 1 hour.

### Methods for Forming Encapsulated Material

A method for forming encapsulated material is generally described in Figure 1. As shown in Figure 1, encapsulated material 100 may be formed using generally known methods and by methods described in co-pending U.S. Application Serial Numbers 12/479,444 and 12/479,454, which are incorporated herein by reference. Encapsulated material may be recovered with known methods such as screening, sieving, centrifugal separation based on size and density, air blow separation, filtering, and mixtures thereof. The recovered encapsulated material may be washed, for example with re-suspension in an appropriate medium and then recovered with any of the methods indicated. The dried, encapsulated material will generally have a particle size in a range of 1 to 1000 microns.

Separation of the encapsulated materials is effective for providing a wet filter cake 200. The wet filter cake may be pressed 300 using known methods to reduce the amount of liquid in the filter cake. For example, the wet filter cake may be pressed using cheese cloth to provide a target moisture content. The wet filter cake may be coarse milled 400, ground 500 and then dried 600. Milling, grinding and drying may all be done using methods known in the art. Encapsulated material may be converted into a powder-form end product by drying in the form of freeze-drying or fluidized-bed drying or by the removal of water.

In this aspect, a total amount of an oil removing material such as SiO₂ may be added at various steps in the method or portions of the oil removing material may be added at different steps in the method. In this aspect, SiO₂ may be added after forming an encapsulated material (see Example 4), after screening, after pressing, after coarse milling, after grinding and/or during drying.

### EXAMPLES

### Example 1: Removal of Surface Oil Using SiO₂

In a beaker, 2400 g of water was added in and then with overhead low shear mixing, 37.5 g of zein powder (F4000, from Freeman Industries) was dispersed in. 10% sodium hydroxide solution was metered in until pH reached 11.3 (to solubilize the zein powder). 450 g of pre-made 25% shellac solution (Bleached dry shellac powder from Temuss Products LTD was hydrated at 25% and pH 8 with ammonium hydroxide solution) was added in. 1.4 g sucrose stearate S-1570 (from the Mitsubishi, Kagaku Corp. Tokyo, Japan) was added in, and then 80 g essential oil blend (13% canola oil, 10% alpha pinene, 25% para-cymene, 12% Linalyl acetate, 40% Thymol acetate) was added slowly to the mix. The emulsion was then homogenized using a PowerGen 700D Homogenizing System (Fisher Scientific, Pitssburg, PA) with 200 mm x 25 mm Generator at 15000 rpm for 4 minutes, then at 20000 rpm for 1 minute. The emulsion was then titrated with 3% citric acid solution until pH reached 3.8. Then, 10 g SiO₂ (Flo Guard AB-D, average size of 35 µm from PPG Industries, Pittsburg, PA) was added in and allowed to mix for 30 minutes. The slurry was then filtered by pouring over 200 mesh screen with 75 µm holes. The particulates on the top of the screen were then resuspended into 2000 g water containing 0.5 g citric acid, 0.5 g Sucrose Stearate (S-1570), and 1.25 g SiO₂ (Flo Guard AB-D). The slurry was mixed for about 5 minutes and re-filtered. The washing was repeated one more time as above, then filtrate (filter cake) was collected. The filter cake was then pressed by squeezing in cheese cloth by hand to remove more of the water. The cake was then split into two portions:
Portion 1: (control, # AA091708-1), it was crumbled, spread on a tray and allowed to dry overnight at room temperature.
Portion 2 (Treated, # AA091708-2), the cake (100 g) was crumbled and dry blended with 10 g SiO₂ that has been sifted through a 75 µm screen. The blend was pulverized in a Waring blender for few seconds to break any lumps, the dry blend was tumbled for about 10 minutes. The semi-dry material was then spread on tray to dry overnight.
Both samples were sized, and only particles between 75-250 µm were collected. As seen from the Table below, the total surface oil of the particles after treatment with SiO₂ was significantly reduced.

| | % a-Pinene | % p-Cymene | % Linalool acetate | % Thymol acetate | Total |
|---|---|---|---|---|---|
| AA091708-1, | | | | | |
| before | 0.046 | 0.26 | 0.66 | 3.3 | 4.2 |
| AA091708-2, | | | | | |
| after treatment | 0.002 | 0.012 | 0.005 | 0.025 | 0.045 |

### Example 2: Removal of Oil with SiO₂ Added at Final Processing Step

Encapsulated material was prepared similar to that described in Example 1 (AA091708-1), and the final powder between 75-250 µm. The moisture content was bellow 5%. The sample was designated # RM 081308-2A.
50 g of powder RM081308-2A was dry blended with 10 g of SiO₂ AB-D (smaller than 75 µm). The dry blend was tumbled for about 2 hours, then the dry blend was sifted on screen having 75 µm holes. The particulates above 75 µm were collected and then analyzed, sample # AA090908. See the Table below for reduction in surface oil treatment with SiO₂ in the final processing step.

### Results:

| | % a-Pinene | % p-Cymene | % Linalool acetate | % Thymol acetate | Total surface oil |
|---|---|---|---|---|---|
| RM081308-2A, before | 0.12 | 0.63 | 0.96 | 3.5 | 5.15 |
| AA090908 after treatment | 0.069 | 0.37 | 0.48 | 2.0 | 2.9 |

### Example 3: Removal of Oil with SiO₂ Added Before and After Pressing

In a beaker, 2400 g of water was added in and then with overhead low shear mixing, 37.5 g of zein powder was dispersed in. 10% sodium hydroxide solution was metered in until pH reached 11.3 (to solubilize the zein powder). 450 g of 25% shellac solution was added in. 1.4 g sucrose stearate (S-1570) was added in, and then 80 g essential oil blend (13% canola oil, 10% alpha pinene, 25% Para-cymene, 12% Linalyl acetate, 40% Thymol acetate) was added slowly to the mix. The emulsion was then homogenized using a IKA Works T25 Basic Ultra Turrax with 200mm x 20mm Generator at 17,500 rpm for 1 minute, then at 24,000 rpm for 5 minutes. The emulsion was then titrated with 3% citric acid solution until the pH reached 3.8. Then, 15 g SiO₂ (Flo Guard FF, average size is 18 µm) was added in and allowed to mix for 30 minutes. The slurry was then filtered by pouring over a filter cloth with <5 µm holes. The particulates on the filter cloth were then resuspended into 2000 g water containing 0.5 g citric acid, 0.5 g sucrose stearate, and 7. 5 g SiO₂ (Flo Guard FF). The slurry was mixed for 15 minutes and then refiltered. The washing was repeated one more time as above, then filter cake was collected. The filter cake was then pressed by placing in a 30 µm filter bag in a press box and squeezing in a cheese press at 20 psi for 20 minutes to remove more of the water. The press cake moisture was 18.8%. The press cake was mixed with 50 g SiO₂ (Flo Guard FF) in a 5 quart Hobart mixer with a whip at speed set at 1 for 5 minutes. The material from the Hobart mixer was ground in a FitzMill Model DA SO6 Comminutor with hammers forward at the highest speed using a 1532-0020 perforated plate. The ground material was tumbled using jar tumblers for 60 minutes. The batch was then dried in a Uni-Glatt Fluid Bed Dryer at 40 °C for 20 minutes. The dried batch was screened and only particles between 75-250 µm were collected.

| | % a-Pinene | % p-Cymene | % Linalyl acetate | % Thymol acetate | Total |
|---|---|---|---|---|---|
| RM102708-2 | | | | | |
| Total Loading | 0.84 | 2.70 | 1.50 | 6.40 | 11.44 |
| RM102708-2 | | | | | |
| Surface Oils | <0.001 | 0.007 | 0.003 | 0.021 | 0.031 |

### Example 4: Removal of Oil with SiO₂ Added Before Pressing

In a beaker, 2400 g of water was added in and then with overhead low shear mixing, 37.5 g of zein powder was dispersed in, 10% sodium hydroxide solution was metered in until pH reached 11.3 (to solubilize the zein powder). 450 g of 25% shellac solution (in ammonium hydroxide) was added in, 1.4 g sucrose stearate (S-1570) was added in, and then 80 g essential oil blend (13% canola oil, 10% alpha pinene, 25% Para-cymene, 12% Linalyl acetate, 40% Thymol acetate) was added slowly to the mix. The emulsion was then homogenized using a IKA Works T25 Basic Ultra Turrax with 200mm x 20mm Generator at 17,500 rpm for 1 minute, then at 24,000 rpm for 5 minutes. The emulsion was then titrated with 3% citric acid solution until the pH reached 3.8. Then, 15 g SiO₂ (Flo Guard FF, average size of 18 µm) was added in and allowed to mix for 30 minutes. The slurry was then filtered by pouring over a filter cloth with <5 µm holes. The particulates on the filter cloth were then resuspended into 2000 g water with 1.0 g citric acid, 1.0 g sucrose stearate, and 7.5 g SiO₂ (Flo Guard FF). The slurry was mixed for 15 minutes and then re-filtered. The particulates on the filter cloth were then resuspended into 2000 g water with 1.0 g citric acid, 1.0 g sucrose stearate, and 150 g SiO₂ (Flo Guard FF), then filter cake was collected. The filter cake was then pressed by placing in a filter cloth with <30 µm holes in a press box and squeezing in a cheese press at 20 psi for 20 minutes to remove more of the water. The press cake was then tumbled in a Patterson- Kelley 16 Quart V-Blender with the intensifier bar on for 30 minutes to break up lumps. The material lumped up even more and was too wet to proceed with further processing. The press cake moisture was 57.1%.

Based on the results of this example, it was concluded that it was not possible to process the material when all the SiO₂ was added in the slurry before pressing as compared to Example # 3 when most of the SiO₂ was added to the pressed cake.

### Example 5: Removal of Oil with SiO₂ With Spray Dying

To a clean 4000 ml plastic beaker, weigh 2400.0 g of D.I. H₂O and start mixing using a LIGHTNIN G3U05R overhead mixer with a 3-pronged impeller blade. Add 32.5 g of Jet Milled Zein powder (F4000, Freeman Industries; Tuckahoe, NY) to the beaker and continue mixing until uniformly dispersed. Add 10% NaOH solution to the solution until the pH reached 11.3.
Mix until zein powder is completely dissolved and the solution is translucent. Add 20.0 g of BiPro WPI powder (Davisco Foods International; Eden Prairie, MN) slowly to avoid clumping and foaming. Mix until the powder is completely dissolved. Add 390.0 g of the pre-made shellac (Temuss #594; Ajax, ON., Canada) solution in ammonium hydroxide at 25% solids. Mix for 5-10 minutes. Confirm that the solution is homogenous. Add 151.4 g of the essential oil blend (13% canola oil, 10% alpha-pinene, 25% p-cymene, 12% linalyl acetate, and 40% thymyl acetate) while mixing. After all the oil is added, mix for 5-10 minutes. Using the Ultra-Turrax T 25 Basic, homogenize the mixture for 4 minutes at 17,500 rpm and then increase speed to 24,000 rpm for 1 additional minute to create the emulsion. Once the emulsion is formed, titrate 3% citric acid solution into the emulsion using Master Flex pump with moderate overhead mixing using same stirrer and speed setting until the pH reached 3.8, creating a slurry. Add 20.0 g of SiO₂ AB-D (PPG Industries; Pittsburg, PA) to the slurry and continue mixing for 20-30 minutes. Bring pH to 2.0 by adding 5N HCl and mix for an additional 10 minutes. Filter the mixture. Collect particles >75 µm and <250 µm. Combine particles into a wet cake. To rinse the particles, in a separate, clean 4000 ml plastic beaker, weigh 2000.0 g of D.I. H₂O and start mixing using a LIGHTNIN G3U05R and 3-pronged impeller blade at notch 10. Adjust the pH to 2.0 by adding 5N HCl. Add 1 g sucrose stearate, S-1570 (Mitsubishi-Kagaku Food Corp.; Tokyo, Japan), and mix until completely dissolved. Add 5.0 g of SiO₂ AB-D. Re-suspend the cake in mixture and mix for 3-5 minutes. The rinsing process was repeated. The batch was then split into two equal volumes while mixing. One portion (A) was sieved on the 25 µm sieve and without pressing, the wet cake was blended with.50 g SiO₂ FF (PPG Industries; Pittsburg, PA) in a Hobart mixer using the paddle blade. Due to the higher moisture content without pressing, an additional 30 g of SiO₂ FF was needed to produce a fluid product. The powder was mixed for 10 minutes and then sieved through a 500 µm screen. The powder was then measured for moisture content and an appropriate amount was added to 0.2% whey protein isolate solution to form a slurry with 15% solids. While mixing, the slurry was pumped into a spray dryer equipped with a two-fluid atomizing nozzle and dried at 170°C inlet and 57°C outlet temperatures. The powder was sized above a #200 mesh, below a #60 mesh (<250 µm / >75µm) before submitting to analytical. The Table below shows that spray drying provides significantly reduced levels of surface oil.

| Sample # 110408nf-A | % a-Pinene | % p-Cymene | % Linalool acetate | % Thymol acetate | Total essential oil |
|---|---|---|---|---|---|
| % Payload | 1.4 | 3.8 | 2.4 | 9.8 | 17.4 |
| %Surface oil | 0.008 | 0.069 | 0.032 | .27 | 0.38 |

The invention will now be described by reference to the following numbered clauses:
1. A method for removing surface oil from an encapsulated material, the method comprising:
   Contacting the encapsulated material with an oil removing material having a particle size larger or smaller than a particle size of the encapsulated material for an amount of time effective for reducing surface oil on the encapsulated material by at least about 80%;
   separating the oil removing material from the encapsulated material; and
   recycling the oil removing material.
2. The method of clause 1, wherein the encapsulated material is SiO₂.
3. The method of clause 1, wherein the encapsulated material is contacted with about 5 to about 50 weight percent of oil removing material.
4. The method of clause 1, wherein the encapsulated material is contacted with the oil removing material for at least about 5 minutes.
5. The method of clause 1, wherein the surface oil on the encapsulated material is reduced by at least about 90%.
6. The method of clause 1, wherein the oil removing material is separated from the encapsulated material by a separation method selected from the group consisting of screening, sieving, centrifugal separation based on size and density, air blow separation, filtering, and combinations thereof.
7. The method of clause 1, wherein the oil removing material is recycled to remove oil.
8. A method for forming an encapsulated material having reduced surface oil, the method comprising:
   forming an encapsulated material;
   screening the encapsulated material to form a wet filter cake;
   pressing the wet filter cake to form a pressed wet filter cake;
   coarse milling the pressed wet filter cake;
   grinding; and
   drying;
   wherein SiO₂ may be added after forming an encapsulated material, after screening, after pressing, after coarse milling, after grinding, and/or during drying.
9. The method of clause 8, wherein at least about 5 weight percent SiO₂ is added.
10. The method of clause 8 wherein encapsulated material is contacted with at SiO₂ for at least about 5 minutes.
11. The method of clause 8, wherein SiO₂ is added after coarse milling and before grinding.

## Claims

1. A method for removing surface oil from an encapsulated material, the method comprising contacting an encapsulated material having a moisture content of about 1 to about 60 weight percent with at least about 5 weight percent of an oil removing material for an amount of time effective for reducing surface oil on the encapsulated material by at least about 80%, wherein the oil removing material has a particle size larger or smaller than a particle size of the encapsulated material.

2. The method of claim 1, wherein the encapsulated material has a moisture content of about 10 to about 40 weight percent.

3. The method of claim 1, wherein the encapsulated material is SiO₂.

4. The method of claim 1, wherein the encapsulated material is contacted with about 5 to about 50 weight percent of oil removing material.

5. The method of claim 1, wherein the encapsulated material is contacted with the oil removing material for at least about 5 minutes.

6. The method of claim 1, wherein the surface oil on the encapsulated material is reduced by at least about 90%.
